# EUROPÄISCHE PATENTSCHRIFT

(11) **EP 2 985 434 B1**
(45) Veröffentlichungstag und Bekanntmachung des Hinweises auf die Patenterteilung: **24.10.2018**
(21) Anmeldenummer: 15001684.8
(22) Anmeldetag: 06.06.2015
(51) Int. Cl.: F01N 3/20, F01N 3/28, F01N 13/00

(54) **ABGASREINIGUNGSVORRICHTUNG FÜR EIN FAHRZEUG, INSBESONDERE FÜR EIN NUTZFAHRZEUG**
EXHAUST GAS PURIFYING APPARATUS FOR A VEHICLE, IN PARTICULAR FOR A COMMERCIAL VEHICLE
DISPOSITIF DE NETTOYAGE DE GAZ D'ÉCHAPPEMENT POUR UN VÉHICULE, NOTAMMENT POUR UN VÉHICULE UTILITAIRE

(30) Priorität: 14.08.2014 AT 6332014
(43) Veröffentlichungstag der Anmeldung: 17.02.2016
(73) Patentinhaber: MAN Truck & Bus Österreich AG, 4400 Steyr (AT)
(72) Erfinder: Reitzenberger, Hannes, 4407 Steyr-Gleink (AT); Baldea, Mihai, 4400 Steyr (AT); Stögmann, Michael, 4452 Ternberg (AT)
(74) Vertreter: Liebl, Thomas

(56) Entgegenhaltungen:
- EP-A1- 2 151 560
- EP-A1- 2 314 837
- EP-A1- 2 551 482
- EP-A1- 2 700 442
- WO-A1-2013/099404
- WO-A2-2009/024815

## Beschreibung

Die Erfindung betrifft eine Abgasreinigungsvorrichtung für ein Fahrzeug, insbesondere für ein Nutzfahrzeug, nach dem Oberbegriff des Patentanspruches 1 sowie ein Fahrzeug, insbesondere ein Nutzfahrzeug, mit der Abgasreinigungsvorrichtung nach Patentanspruch 14.

Moderne Fahrzeug, insbesondere Nutzfahrzeuge, weisen regelmäßig Abgasreinigungsvorrichtungen mit wenigstens einem sogenannten SCR-Katalysator auf. Die Abkürzung "SCR" steht dabei für "Selective Catalytic Reduction" und beschreibt ein chemisches Verfahren, bei dem mit Hilfe eines Reduktionsmittels die Stickoxide im Abgas reduziert werden. Als Reduktionsmittel wird dabei bevorzugt Ammoniak verwendet. Weil der Umgang mit reinem Ammoniak aufwendig ist, wird bei Fahrzeugen üblicherweise eine synthetische wässrige Harnstofflösung verwendet, die in einer dem SCR-Katalysator vorgeschalteten Mischeinrichtung mit dem Abgasstrom vermischt wird. Durch diese Vermischung wird die wässrige Harnstofflösung erhitzt und die wässrige Harnstofflösung reagiert, insbesondere unter Verwendung eines sogenannten Hydrolyse-Katalysators, zu Ammoniak. Die wässrige Harnstofflösung setzt sich dabei üblicherweise aus 32,5% Harnstoff und 67,5% Wasser zusammen.

Des Weiteren ist es auch bekannt, diese Mischeinrichtung im Bereich einer 180°-Umlenkung des Abgasstroms im Abgasstrang anzuordnen. Dadurch kann der Abgasstrang auf besonders einfache Weise kompakt bzw. platzsparend gestaltet werden. So ist aus der EP 2 314 837 A1 bereits eine Mischvorrichtung zum Mischen eines Abgases mit einem Additiv, vorzugsweise einer wässrigen Harnstofflösung, bekannt, mittels der ein, in Abgas-Strömungsrichtung gesehen, stromauf der Mischvorrichtung angeordneter Abgasstrangteil und ein stromab der Mischvorrichtung angeordneter Abgasstrangteil strömungstechnisch verbunden werden. Die Abgasstrangteile und die Mischvorrichtung sind dabei derart ausgebildet, dass mittels der Mischvorrichtung der Abgasstrom in etwa um 180° umgelenkt wird. Konkret ist die Mischvorrichtung hier im Wesentlichen als gerades, senkrecht zu den beiden Abgasstrangteilen angeordnetes Rohrelement ausgebildet, wobei ein Endbereich des Rohrelements in den stromauf des Rohrelements angeordneten Abgasstrangteil einragt und der andere Endbereich des Rohrelements in den stromab des Rohrelements angeordneten Abgasstrangteil einragt. Der beiden Abgasstrangteile sind parallel zueinander angeordnet und mit ihren einander zugewandten Außenwandbereichen miteinander in Anlage bzw. an diesen Außenwandbereichen materialeinheitlich und/oder einstückig miteinander verbunden. Insgesamt handelt es sich hierbei um einen relativ aufwendigen und fertigungstechnisch schwierig umzusetzenden Aufbau, bei dem zwar das zugedüste Reduktionsmittel gut von der Rohrwand weggehalten wird, jedoch die gewünschte homogene Verteilung der Harnstofflösung im Abgasstrom nicht in der gewünschten Weise erreicht wird.

Aus der WO 2009/024815 A2 geht eine Abgasreinigungsvorrichtung für ein Fahrzeug hervor, bei der eine Misch- und Umlenkeinrichtung vorgesehen ist, mittels der ein in einen Abgasstrom einleitbares Additiv mit einem Abgasstrom vermischt und der Abgasstrom um 180° umgelenkt werden kann.

Die weitere WO 2013/099404 A1 offenbart eine Abgasreinigungsvorrichtung mit einer Misch- und Umlenkeinrichtung. Diese Misch- und Umlenkeinrichtung weist ein im Wesentlichen L-förmiges Rohrbogenelement auf, das zusammen mit dem stromauf des L-förmigen Rohrbogenelements angeordneten Abgasstrangteil eine Umlenkeinrichtung zur Umlenkung des Abgasstroms um 180° bildet.

Aufgabe der Erfindung ist es, eine Abgasreinigungsvorrichtung für ein Fahrzeug, insbesondere für ein Nutzfahrzeug, bereitzustellen, die hinsichtlich der Fertigung und/oder des Aufbaus einfach ist und/oder mit der eine homogene Vermischung von Abgas und Additiv, insbesondere wässriger Harnstofflösung, erreicht wird.

Diese Aufgabe wird durch die Merkmale der unabhängigen Ansprüche gelöst. Bevorzugte Weiterbildungen sind in den Unteransprüchen offenbart.

Die Erfindung betrifft eine Abgasreinigungsvorrichtung für ein Fahrzeug, insbesondere für ein Nutzfahrzeug, mit wenigstens einem in einem Abgasstrang der Abgasreinigungsvorrichtung angeordneten SCR-Katalysator, und mit einer, in Abgas-Strömungsrichtung gesehen, stromauf des wenigstens einen SCR-Katalysators angeordneten Misch- und Umlenkeinrichtung, mittels der ein in einen Abgasstrom einleitbares Additiv, insbesondere eine wässrige Harnstofflösung, mit dem Abgasstrom vermischt und der Abgasstrom umgelenkt werden kann, insbesondere in etwa um 180° umgelenkt werden kann. Erfindungsgemäß weist die Misch- und Umlenkeinrichtung ein im Wesentlichen U-förmiges Rohrbogenelement auf, mittels dem ein stromauf der Misch- und Umlenkreinrichtung angeordneter Abgasstrangteil und ein stromab der Misch- und Umlenkeinrichtung angeordneter Abgasstrangteil strömungstechnisch verbunden werden können, wobei die beiden Abgasstrangteile im Wesentlichen parallel zueinander ausgerichtet sind.

Mittels des U-förmigen Rohrbogenelements wird der Aufbau der Abgasreinigungsvorrichtung deutlich vereinfacht, da zur Verbindung der Abgasstrangteile beispielsweise keine Ausnehmungen an den einander zugewandten Außenwandbereichen der Abgasstrangteile vorgesehen sein müssen, durch die ein Rohrelement geführt werden muss. Vielmehr muss das U-förmige Rohrbogenelement lediglich mit seinen Anschlussenden, beispielsweise über einfache Flanschverbindungen, an die Endbereiche der Abgasstrangteile angeschlossen werden. Dadurch wird auch die Fertigung der Abgasreinigungsvorrichtung deutlich vereinfacht. Zudem kann mittels des U-förmigen Rohrbogenelements auch ein besonders geringer Strömungswiderstand für das Abgas sichergestellt werden.

In einer bevorzugten Ausführungsform der erfindungsgemäßen Abgasreinigungsvorrichtung kann zumindest ein U-Schenkel des Rohrbogenelements als gerader und/oder zylinderförmiger Rohrabschnitt ausgebildet sein. Auf diese Weise ist der U-Schenkel funktional in der Art eines herkömmlichen Strömungsrohres ausgebildet und eine besonders einfache Fertigung des U-Schenkels möglich. Vorzugsweise kann sich der Querschnitt zumindest eines U-Schenkels wenigstens bereichsweise bis hin zu einer den U-Schenkeln abgewandten Außenwand der U-Basis erstrecken, das heißt die U-Schenkelgeometrie bis zu dieser Außenwand weitergeführt werden, um die Fertigung des erfindungsgemäßen Rohrbogenelements noch weiter zu vereinfachen.

In einer bevorzugten konkreten Ausführung ist eine den U-Schenkeln abgewandte Außenwand der U-Basis wenigstens bereichsweise als ebene Fläche ausgebildet, insbesondere durch eine ebene Wand bzw. Platte. Dadurch kann das Rohrbogenelement bzw. die erfindungsgemäße Abgasreinigungsvorrichtung besonders kompakt ohne volumenmäßig große gekrümmte Rohrbogenbereiche ausgebildet werden. Eine derartige Bauweise ist insbesondere deswegen vorteilhaft, weil zur Anordnung von Abgasreinigungsvorrichtungen an Fahrzeugen regelmäßig nur sehr wenig Bauraum zur Verfügung steht. Bevorzugt können zudem die beiden U-Schenkel senkrecht zu dieser Außenwand ausgerichtet sein, um das Rohrbogenelement auch insgesamt gesehen besonders kompakt auszuführen.

Vorzugsweise kann die U-Basis des Rohrbogenelements als block- und/oder kastenförmiges, insbesondere quaderförmiges Verbindungselement ausgebildet sein, das einen die beiden voneinander beabstandeten U-Schenkel des Rohrbogenelements strömungstechnisch miteinander verbindenden Strömungskanal ausbildet. Ein derartiger Aufbau ist besonders einfach in der Fertigung und ermöglicht die ebene beschriebene Umsetzung einer kompakten Bauweise.

Erfindungsgemäß weist die Misch- und Umlenkeinrichtung ein innerhalb des Rohrbogenelements, insbesondere innerhalb der U-Basis des Rohrbogenelements angeordnetes, Mischrohr bzw. Mischrohrelement aufweisen, wobei eine Abgas-Eintrittsmündung des Mischrohrelements einem ersten der U-Schenkel des Rohrbogenelements zugeordnet ist, während eine Abgas-Austrittsmündung des Mischrohrelements einem zweiten der U-Schenkel des Rohrbogenelements zugeordnet ist. Mittels eines derartigen Mischrohrelements wird eine vorteilhafte Vermischung von Additiv und Abgas erzielt und daher eine besonders effektive Reduzierung der in dem Abgas enthaltenen Stickoxide möglich. Beispielsweise kann das Mischrohrelement in einfacher Weise als unaufwändig zu fertigender gerader und/oder zylinderförmiger Rohrabschnitt ausgebildet sein.

Bei einer derartigen Ausführung liegt bevorzugt die Abgas-Eintrittsmündung des Mischrohrelements, bezogen auf die Strömungsrichtung durch den Strömungskanal, in einem oberen Bereich des Strömungskanals innerhalb der U-Basis des Rohrbogenelements und/oder die Abgas-Austrittsmündung des Rohrelements in einem demgegenüber unteren Bereich des Strömungskanals innerhalb der U-Basis des Rohrbogenelements. Insgesamt wird hier konstruktiv einfach sichergestellt, dass zumindest ein Teil des durch das Rohrbogenelement strömenden Abgases durch das Mischrohrelement strömt und gleichzeitig der Aufbau und/oder die Fertigung bzw. Anordnung der Misch- und Umlenkeinrichtung einfach ist.

Bevorzugt kann wenigstens im Bereich einer Abgas-Eintrittsmündung des Mischrohrelements wenigstens ein Strömungs-Leitelement, insbesondere ein Drall-Element, vorgesehen sein, mittels dem das in das Mischrohrelement eintretende Abgas in eine definierte Strömungsbewegung, insbesondere in eine definierte Drallbewegung, gebracht werden kann. Mittels eines derartigen Strömungs-Leitelements kann die Vermischung von Additiv und Abgas in dem Mischrohrelement weiter verbessert werden. Das wenigstens eine Strömungs-Leitelement kann dabei vorzugsweise derart ausgebildet sein, dass das Abgas randseitig im Bereich einer Rohrwand des Mischrohrelements in eine definierte Drallbewegung gebracht wird. Diese Drallbewegung ist bevorzugt eine spiralförmige Bewegung, bei der sich das Abgas sowohl in Mischrohrelement-Umfangsrichtung als auch in Mischrohrelement-Längsrichtung bewegt. Dadurch wird verhindert, dass sich das Additiv an der Rohrwand des Mischrohrelements absetzt und somit die Vermischung von Additiv und Abgas deutlich verbessert. Das wenigstens eine Strömungs-Leitelement kann bevorzugt weiter derart ausgebildet sein, dass eine zentrale Mittenströmung des Abgases durch das Mischrohrelement keine Drallbewegung aufweist, sondern im Wesentlichen linear in Mischrohrelement-Längsrichtung strömt. Dadurch wird das Absetzen von Additiv an der Rohrwand des Mischrohrelements weiter zuverlässig verhindert und die Vermischung von Additiv und Abgas wiederum verbessert. Das Strömungs-Leitelement kann beispielsweise materialeinheitlich und/oder einstückig mit dem Mischrohrelement verbunden sein, beispielsweise durch Ausklinken der schaufelartigen Strömungs-Leitelemente aus der Rohrwand. Alternativ können die Strömungs-Leitelemente aber auch durch separate Bauteile gebildet sein, zum Beispiel durch Schweißen an der Rohrwand festgelegt werden.

Bevorzugt weist das Strömungs-Leitelement mehrere im Bereich der Abgas-Eintrittsmündung des Rohrelements angeordnete Abgas-Leitschaufeln auf, die umfangsseitig verteilt und/oder beabstandet an einer Rohrwand des Mischrohrelements festgelegt sind. Bevorzugt sind die Strömungs-Leitelemente mit ihren freien Endbereichen, in Radialrichtung gesehen, nach innen gekrümmt und/oder ragen diese in definierter Weise von der Rohrwand des Rohrelements ab. Mittels derartiger Abgas-Leitschaufeln kann das Strömungs-Leitelement besonders einfach ausgebildet werden. Zudem kann mittels der Abgas-Leitschaufeln die definierte Strömungsbewegung des in das Mischrohrelement eintretenden Abgases auch besonders einfach eingestellt werden.

In einer weiteren Ausführungsform kann die Misch- und Umlenkeinrichtung eine Injektionseinrichtung, insbesondere eine Injektionsdüse, aufweisen, mittels der das Additiv in einen von Abgas durchströmten Innenraumbereich des Rohrbogenelements injiziert und/oder eingeleitet werden kann. Die Anbringung der Injektionseinrichtung an der Misch- und Umlenkeinrichtung hat den Vorteil, dass die Injektionseinrichtung an dem speziell für die Durchmischung von Abgas und Additiv verwendeten Bauteil vorgesehen ist. Dadurch kann die Durchmischung von Additiv und Abgas weiter optimiert werden. Zudem muss an den speziell für definierte Aufgaben in der Abgasreinigung konstruierten, stromauf und stromab der Misch- und Umlenkeinrichtung angeordneten Abgasstrangteilen auch keine Umgestaltung zur Anbringung einer derartigen Injektionseinrichtung erfolgen. Besonders bevorzugt kann die Injektionseinrichtung derart angeordnet sein, dass die Injektion und/oder Einleitung des Additivs stromauf des Mischrohrelements und/oder im Bereich der Abgas-Eintrittsmündung des Mischrohrelements erfolgt.

Vorzugsweise wird das Additiv direkt in das Innere des Mischrohrelements injiziert und/oder eingeleitet. Bevorzugt kann die Einleitung des Additivs dabei in Abgas-Strömungsrichtung erfolgen, um die Vermischung von Additiv und Abgas im Inneren des Mischrohrelement sicherzustellen. Weiter bevorzugt kann die Einleitung des Additivs, in Rohrelement-Radialrichtung gesehen, zentral und/oder stromauf des wenigstens einen Strömungs-Leitelements erfolgen, um die Vermischung von Abgas und Additiv weiter zu optimieren.

In einer bevorzugten Ausgestaltung kann die Injektionseinrichtung an einer den U-Schenkeln abgewandten Außenwand der U-Basis des Rohrbogenelements festgelegt sein. Eine derartige Festlegung ermöglicht einen besonders einfachen Aufbau der erfindungsgemäßen Misch- und Umlenkeinrichtung.

Besonders bevorzugt ist die Injektionseinrichtung derart ausgebildet und/oder angeordnet, dass eine Düse der Injektionseinrichtung in einen Abgas-Eintrittsbereich des Mischrohrelements einragt. So kann das Additiv besonders einfach in den durch das Mischrohrelement strömenden Abgasstrom injiziert und/oder eingeleitet werden, da hierzu beispielsweise keine konstruktiven Maßnahmen an dem Mischrohrelement selbst vorgesehen werden müssen.

Weiter erfindungsgemäß weist die Misch- und Umlenkeinrichtung wenigstens ein Homogenisier-Element auf. Mittels eines derartigen Homogenisier-Elements ist es beispielsweise möglich, das Additiv besonders gleichmäßig bzw. homogen in dem Abgasstrom zu verteilen. Erfindungsgemäß ist das Homogenisier-Element dabei stromab des Mischrohrelements im Bereich der Abgas-Austrittsmündung des Mischrohrelements angeordnet, um beispielsweise die aus dem Mischrohrelement austretende Additiv-Abgas-Mischung mit dem nicht durch das Mischrohrelement strömenden Teil des Abgasstroms noch besser zu vermischen.

Erfindungsgemäß ist das als Blende, insbesondere als Blende und Prallelement, ausgebildete Homogenisier-Element ringförmig ausgebildet. Bevorzugt kann das Homogenisier-Element derart an der Rohrwand des Rohrbogenelements festgelegt sein, dass mittels diesem der Strömungsquerschnitt gegenüber einem stromauf und/oder stromab an das Homogenisier-Element angrenzenden Strömungsbereich reduziert ist. Auf diese Weise kann das Homogenisier-Element beispielsweise zur Ausbildung eines Abgas-Rückstaus verwendet werden und somit die homogene Verteilung des Additivs in dem Abgas besonders einfach und effektiv realisiert werden.

In einer weiteren konkreten Ausführung kann der stromauf angeordnete Abgasstrangteil wenigstens einen Partikelfilter und/oder wenigstens einen Oxidationskatalysator und/oder wenigstens ein Mischelement, insbesondere einen statischen Mischer und/oder ein Lochblech, aufweisen, um eine optimierte und effektive Abgasreinigung zu erzielen. Bevorzugt ist dabei der Partikelfilter zum Beispiel an einen U-Schenkel des Rohrbogenelements angeschlossen. Der stromab angeordnete Abgasstrangteil kann wenigstens einen SCR-Katalysator und/oder wenigstens einen Ammoniak-Sperrkatalysator aufweisen, um das Abgas optimal zu reinigen. Besonders bevorzugt ist der SCR-Katalysator dabei an einen U-Schenkel des Rohrbogenelements angeschlossen.

Ferner wird ein Fahrzeug, insbesondere ein Nutzfahrzeug, mit der erfindungsgemäßen Abgasreinigungsvorrichtung beansprucht. Die sich daraus ergebenden Vorteile sind identisch mit den bereits gewürdigten Vorteilen der erfindungsgemäßen Abgasreinigungsvorrichtung, so dass diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten und/oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnung lediglich beispielhaft näher erläutert.

Es zeigen:
- Fig. 1: in einer schematischen Darstellung eine bevorzugte Ausführung der erfindungsgemäßen Abgasreinigungsvorrichtung;
- Fig. 2: in einer Perspektivdarstellung eine Misch- und Umlenkeinrichtung der Abgasreinigungsvorrichtung;
- Fig. 3: eine Draufsicht auf die Misch- und Umlenkeinrichtung;
- Fig. 4: eine Schnittdarstellung der Schnittebene A-A aus Fig. 3;
- Fig. 5: eine Schnittdarstellung der Schnittebene B-B aus Fig. 3; und
- Fig. 6: eine Darstellung der Misch- und Umlenkeinrichtung, anhand der eine Strömungsbewegung innerhalb der Misch- und Umlenkeinrichtung erläutert wird.

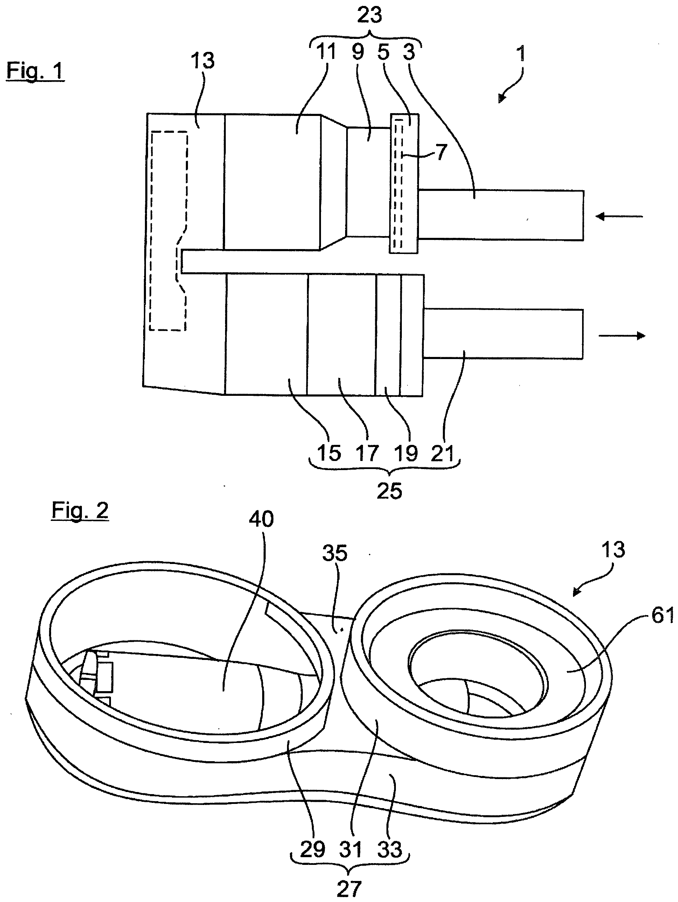

In Fig. 1 ist schematisch eine Abgasreinigungsvorrichtung 1 gezeigt, mittels der beispielsweise das Abgas eines Nutzfahrzeuges, insbesondere eines Lastkraftwagens oder eines Linienbusses, gereinigt wird. Die Abgasreinigungsvorrichtung 1 weist, in Abgas-Strömungsrichtung gesehen, hintereinander angeordnet ein Abgas-Eintrittsrohr 3, ein Abgas-Mischelement 5 mit einem mit gestrichelten Linien angedeuteten Lochblech 7, einen Oxidationskatalysator 9, einen Partikelfilter 11, eine Misch- und Umlenkeinrichtung 13, einen ersten SCR-Katalysator 15, einen zweiten SCR-Katalysator 17, einen Ammoniak-Sperrkatalysator 19 sowie ein Abgas-Austrittsrohr 21 auf. Das Abgas-Eintrittsrohr 3, das Abgas-Mischelement 5, der Oxidationskatalysator 9 und der Partikelfilter 11 bilden dabei ein, in Abgas-Strömungsrichtung gesehen, stromauf der Misch- und Umlenkeinrichtung 13 angeordnetes Abgasstrangteil 23 aus. Der erste SCR-Katalysator 15, der zweite SCR-Katalysator 17, der Ammoniak-Sperrkatalysator 19 und das Abgas-Austrittsrohr 21 bilden ein stromab der Misch- und Umlenkeinrichtung 13 angeordnetes Abgasstrangteil 25 aus, das hier beabstandet und im Wesentlichen parallel zum ersten Abgasstrangteil 23 verläuft. Die Abgasstrangteile 23 und 25 setzen sich hier lediglich beispielhaft aus den genannten Komponenten zusammen. Ebenso können sich die Abgasstrangteile 23 und 25 auch aus anderen Komponenten zusammensetzen und die einzelnen Komponenten anders angeordnet werden.

Wie aus Fig. 1 weiter hervorgeht, wird mittels der Misch- und Umlenkeinrichtung 13 der Abgasstrom in etwa um 180° umgelenkt. Eine derartige Umlenkung des Abgasstroms ermöglicht eine besonders kompakte Bauweise der Abgasreinigungsvorrichtung 1. Wie in den Fig. 2 bis 4 deutlicher gezeigt ist, weist die Misch- und Umlenkeinrichtung 13 ein U-förmiges Rohrbogenelement 27 auf. Das U-förmige Rohrbogenelement 27 setzt sich aus einem ersten U-Schenkel 29, einem zweiten U-Schenkel 31 und einer U-Basis 33 zusammen. Die beiden U-Schenkel 29 und 31 sind, hier lediglich beispielhaft, als gerade und zylinderförmige Rohrabschnitte ausgebildet und materialeinheitlich und einstückig mit der U-Basis 33 des Rohrbogenelements 37 verbunden. Die U-Basis 33 weist hier beispielhaft eine im Wesentlichen quaderförmige Außenkontur auf und bildet ein Verbindungselement aus, mittels dem die beiden voneinander beabstandeten U-Schenkel 29 und 31 des Rohrbogenelements 27 unter Bildung eines Strömungskanals 35 strömungstechnisch miteinander verbunden sind. Die Außenkontur der U-Basis 33 ist hier zudem derart ausgebildet, dass sich der Querschnitt der beiden U-Schenkel 29 und 31 bis hin zu dem Strömungskanal 35 und bis hin zu einer der beiden U-Schenkeln 29 und 31 abgewandten Außenwand 37 der U-Basis 33 erstreckt. Die Außenwand 37 der U-Basis 33 ist hier beispielhaft als ebene Wand bzw. Platte ausgebildet. Die beiden U-Schenkel 29 und 31 sind zudem in etwa senkrecht zu der Außenwand 37 der U-Basis 33 ausgerichtet.

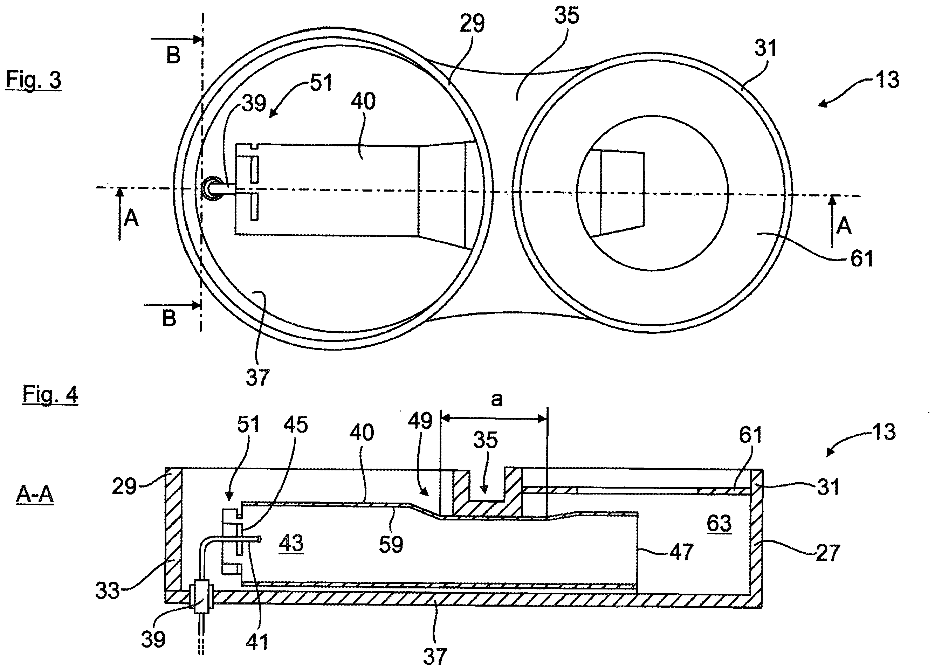

Wie in den Fig. 3 und 4 gezeigt ist, weist die Misch- und Umlenkeinrichtung 13 hier weiter eine schematisch gezeigte Injektionseinrichtung 39 auf, mittels der ein Additiv, hier beispielshaft eine wässrige Harnstofflösung, in das Innere eines Mischrohrelements 40 der Misch- und Umlenkeinrichtung 13 eingeleitet werden kann. Die Injektionseinrichtung 39 ist hier beispielhaft an der Außenwand 37 der U-Basis 33 festgelegt und dabei derart gekrümmt ausgebildet, dass eine Düse 41 der Injektionseinrichtung 39 in einen Abgas-Eintrittsbereich 43 des Mischrohrelements 40 einragt. Zudem ist die Injektionseinrichtung derart angeordnet, dass die Einleitung des Additivs in Abgas-Strömungsrichtung und, in Mischrohrelement-Radialrichtung gesehen, zentral in das Mischrohrelement 40 folgt.

Das Mischrohrelement 40 ist hier speziell für eine verbesserte Vermischung von Abgas und eingeleiteter wässriger Harnstofflösung vorgesehen. Durch die Vermischung von wässriger Harnstofflösung und Abgas wird die wässrige Harnstofflösung erhitzt und Ammoniak gebildet. Das gebildete Ammoniak gelangt dann zusammen mit dem Abgas in die beiden SCR-Katalysatoren 15 und 17 und reduziert hier die in dem Abgas enthaltenen Stickoxide. Wie aus Fig. 4 hervorgeht, ist das Mischrohrelement 40 bevorzugt innerhalb der U-Basis 33 des Rohrbogenelements 27 angeordnet, zum Beispiel mittels einer Schweißverbindung an der Innenseite der Außenwand 37 befestigt. Weiter ist eine Abgas-Eintrittsmündung 45 des Mischrohrelements 40 dem ersten U-Schenkel 29 des Rohrbogenelements 27 bevorzugt derart zugeordnet, dass es, in Draufsicht auf die Misch- und Umlenkeinrichtung 13 gesehen, zentral bezüglich des zylinderförmigen Querschnitts des ersten U-Schenkels 29 angeordnet ist. Eine Abgas-Austrittsmündung 47 des Mischrohrelements 40 ist dem zweiten U-Schenkel 31 des Rohrbogenelements 27 bevorzugt derart zugeordnet, dass es, in Draufsicht auf die Misch- und Umlenkeinrichtung 13 gesehen, zentral bezüglich des zylinderförmigen Querschnitts des zweiten U-Schenkels 31 angeordnet ist. Im Bereich des Strömungskanals 35 weist das Mischrohrelement 40 eine sich über eine definierte Teilstrecke a entlang des Strömungskanals erstreckende Einschnürung 49 auf. Diese Einschnürung 49 führt zu einer Art Venturi-Effekt und damit zu einer Vergrößerung der Strömungsgeschwindigkeit in diesem Bereich a. Dadurch wird zusammen mit dem sich daran anschließenden strömungsberuhigten Bereich die Vermischung von wässriger Harnstofflösung und Abgas weiter begünstigt. Grundsätzlich ist das Mischrohrelement 40 jedoch bevorzugt als gerader und zylinderförmiger Rohrabschnitt ausgebildet.

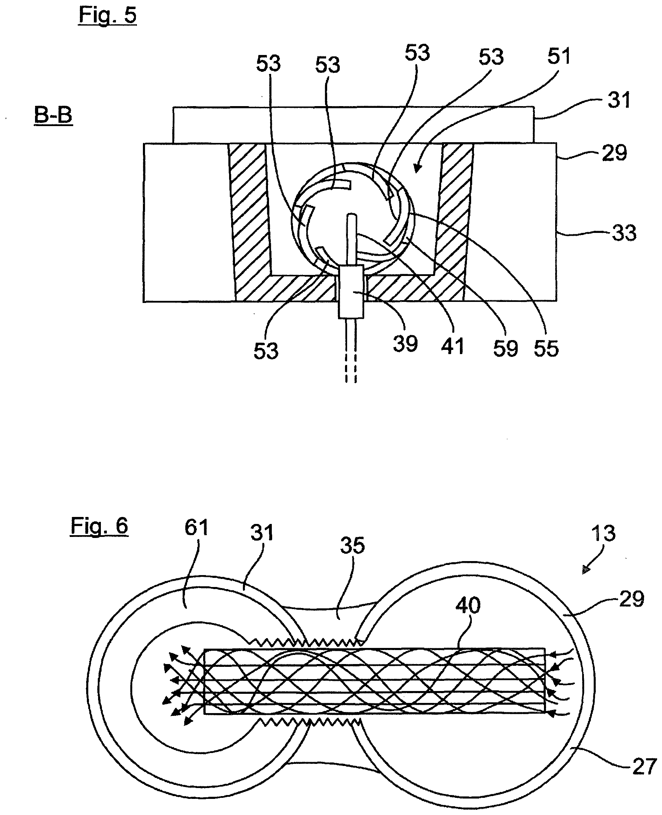

Wie in den Fig. 3 und 4, besonders deutlich in Fig. 5, gezeigt ist, weist das Mischrohrelement 40 an dessen Abgas-Eintrittsbereich optional mehrere ein Strömungs-Leitelement 51 ausbildende Abgas-Leitschaufeln 53 auf. Die Abgas-Leitschaufeln 53 sind hier beispielhaft materialeinheitlich und einstückig mit dem Mischrohrelement 40 verbunden und umfangsseitig gleichmäßig verteilt bzw. beabstandet an einer Stirnseite 55 des Mischrohrelements 40 angeordnet. Mit ihren freien Endbereichen ragen die Abgas-Leitschaufeln 53, in Mischrohrelement-Radialrichtung gesehen, nach innen von einer Rohrwand 50 des Mischrohrelements 40 ab. Die freien Endbereiche der Abgas-Leitschaufeln 53 weisen dabei eine definierte Krümmung, in Mischrohrelement-Radialrichtung gesehen, nach innen auf.

Mittels des Abgas-Leitelements 51 wird das in das Mischrohrelement 40 eintretende Abgas in eine in Fig. 6 schematisch dargestellte Strömungsbewegung gebracht. Im Bereich der Rohrwand 50 des Mischrohrelements 40 wird das Abgas dabei in eine definierte Drallbewegung gebracht. Bei dieser Drallbewegung strömt das Abgas sowohl in Mischrohrelement-Umfangsrichtung als auch in Mischrohrelement-Längsrichtung, so dass sich eine im Wesentlichen spiralförmige Abgas-Bewegung ergibt. Dadurch wird verhindert, dass sich die mittels der Injektionseinrichtung 39 eingeleitete wässrige Harnstofflösung an der Rohrwand 50 des Mischrohrelements 40 absetzt und somit die Vermischung von wässriger Harnstofflösung und Abgas verbessert. In Mischrohrelement-Radialrichtung gesehen weiter innen, weist eine von der randseitigen Drallströmung ummantelte, zentrale Mittenströmung des Abgases keine Drallbewegung auf, sondern das Abgas bewegt sich hier im Wesentlichen linear in Mischrohrelement-Längsrichtung. Dadurch wird die Vermischung der zentral und in Abgas-Strömungsrichtung in das Mischrohrelement 40 eingeleiteten, wässrigen Harnstofflösung mit dem Abgas weiter verbessert.

Wie aus den Fig. 3 und 4 weiter hervorgeht, weist die Misch- und Umlenkeinrichtung 13 ein Homogenisier-Element auf, hier eine ringförmige Blende 61, mittels dem die Harnstoff-Wasserlösung homogen bzw. gleichmäßig in dem Abgas verteilt wird. Die Blende 61 ist hier derart innerhalb des zweiten U-Schenkels 31 des Rohrbogenelements 27 angeordnet, dass mittels dieser der Strömungsquerschnitt des zylinderförmigen zweiten U-Schenkels 31 deutlich verringert wird. Zudem ist die Blende im Bereich der Abgas-Austrittsmündung 47 des Mischrohrelements 40 angeordnet. Aufgrund dieser Anordnung trifft das mit wässriger Harnstofflösung vermischte, aus dem Mischrohrelement 40 austretende Abgas zunächst auf die Blende 61 und wird in einem Staubereich 63 des Rohrbogenelements 27 rückgestaut. Dieser Rückstau bewirkt eine verbesserte Vermischung des aus dem Mischrohrelement 40 austretenden Abgases mit dem außerhalb des Mischrohrelements 40 durch das Rohrbogenelement 27 geströmten Abgas. Dadurch wird die Harnstoff-Wasserlösung besonders gleichmäßig in dem Abgas verteilt. Mittels der gleichmäßig in dem Abgas verteilten, wässrigen Harnstofflösung können dann in den SCR-Katalysatoren 15 und 17 die Stickoxide des Abgases besonders effektiv verringert werden.

### Bezugszeichenliste

- 1: Abgasreinigungsvorrichtung
- 3: Abgas-Eintrittsrohr
- 5: Abgas-Mischelement
- 7: Lochblech
- 9: Oxidationskatalysator
- 11: Partikelfilter
- 13: Misch- und Umlenkeinrichtung
- 15: erster SCR-Katalysator
- 17: zweiter SCR-Katalysator
- 19: Ammoniak-Sperrkatalysator
- 21: Abgas-Austrittsrohr
- 23: stromauf angeordneter Abgasstrangteil
- 25: stromab angeordneter Abgasstrangteil
- 27: Rohrbogenelement
- 29: erster U-Schenkel
- 31: zweiter U-Schenkel
- 33: U-Basis
- 35: Strömungskanal
- 37: Außenwand
- 39: Injektionseinrichtung
- 40: Mischrohrelement
- 41: Düse
- 43: Abgas-Eintrittsbereich
- 45: Abgas-Eintrittsmündung
- 47: Abgas-Austrittsmündung
- 49: Einschnürung
- 50: Rohrwand
- 51: Abgas-Leitelement
- 53: Abgas-Leitschaufel
- 55: Stirnseite Mischrohrelement
- 61: Blende
- 63: Staubereich
- a: definierte Teilstrecke

## Patentansprüche

1. Abgasreinigungsvorrichtung für ein Fahrzeug, insbesondere für ein Nutzfahrzeug, mit wenigstens einem in einem Abgasstrang der Abgasreinigungsvorrichtung (1) angeordneten SCR-Katalysator (15, 17), und mit einer, in Abgas-Strömungsrichtung gesehen, stromauf des wenigstens einen SCR-Katalysators (15, 17) angeordneten Misch- und Umlenkeinrichtung (13), mittels der ein in einen Abgasstrom einleitbares Additiv, insbesondere eine wässrige Harnstofflösung, mit dem Abgasstrom vermischbar ist, und mittels der der Abgasstrom umlenkbar ist, insbesondere in etwa um 180° umlenkbar ist, wobei die Misch- und Umlenkeinrichtung (13) ein im Wesentlichen U-förmiges Rohrbogenelement (27) aufweist, mittels dem ein stromauf der Misch- und Umlenkeinrichtung (13) angeordneter Abgasstrangteil (23) und ein stromab der Misch- und Umlenkeinrichtung (13) angeordneter Abgasstrangteil (25) strömungstechnisch verbindbar sind, wobei die Misch- und Umlenkeinrichtung (13) ein innerhalb des Rohrbogenelements (27 angeordnetes Mischrohrelement (40) aufweist, wobei eine Abgas-Eintrittsmündung (45) des Mischrohrelements (40) einem ersten der U-Schenkel (29) des Rohrbogenelements (27) zugeordnet ist, und wobei eine Abgas-Austrittsmündung (47) des Mischrohrelements einem zweiten der U-Schenkel (31) des Rohrbogenelements (27) zugeordnet ist, **dadurch gekennzeichnet, dass** die Misch- und Umlenkeinrichtung (13) wenigstens ein als ringförmige Blende ausgebildetes Homogenisier-Element (61) aufweist, das stromab des Mischrohrelements (13) im Bereich der Abgas-Austrittsmündung (47) des Mischrohrelements (40) angeordnet ist.

2. Abgasreinigungsvorrichtung nach Anspruch 1, **dadurch gekennzeichnet, dass** zumindest ein U-Schenkel (29, 31) des Rohrbogenelements (27) als gerader und/oder zylinderförmiger Rohrabschnitt ausgebildet ist, und/oder dass sich der Querschnitt zumindest eines U-Schenkels (29, 31) wenigstens bereichsweise bis hin zu einer den U-Schenkeln (29, 31) abgewandten Außenwand (37) der U-Basis (33) erstreckt.

3. Abgasreinigungsvorrichtung nach Anspruch 1 oder 2, **dadurch gekennzeichnet, dass** eine den U-Schenkeln (29, 31) abgewandte Außenwand (37) der U-Basis (33) wenigstens bereichsweise als ebene Fläche ausgebildet ist, insbesondere durch eine ebene Platte gebildet ist, wobei bevorzugt vorgesehen ist, dass die beiden U-Schenkel (29 31) senkrecht zu dieser Außenwand (37) ausgerichtet sind.

4. Abgasreinigungsvorrichtung nach einem der vorhergehenden Ansprüche, **dadurch gekennzeichnet, dass** die U-Basis (33) des Rohrbogenelements (27) als block- und/oder kastenförmiges, insbesondere quaderförmiges, Verbindungselement ausgebildet ist, das einen die beiden voneinander beabstandeten U-Schenkel (29, 31) des Rohrbogenelements (27) strömungstechnisch miteinander verbindenden Strömungskanal (35) ausbildet.

5. Abgasreinigungsvorrichtung nach einem der vorhergehenden Ansprüche, **dadurch gekennzeichnet, dass** das Mischrohrelement innerhalb der U-Basis (33) des Rohrbogenelements (27) angeordnet ist, und/oder dass das Mischrohrelement (40) als gerader und/oder zylinderförmiger Rohrabschnitt ausgebildet ist.

6. Abgasreinigungsvorrichtung nach Anspruch 5, **dadurch gekennzeichnet, dass** wenigstens im Bereich einer Abgas-Eintrittsmündung (45) des Mischrohrelements (40) wenigstens ein Strömungs-Leitelement (51), insbesondere ein Drallelement, vorgesehen ist, mittels dem das in das Mischrohrelement (40) eintretende Abgas in eine definierte Strömungsbewegung, insbesondere in eine definierte Drallbewegung, bringbar ist, wobei bevorzugt vorgesehen ist, dass das Strömungs-Leitelement (51) materialeinheitlich und/oder einstückig mit dem Mischrohrelement (40) verbunden ist.

7. Abgasreinigungsvorrichtung nach Anspruch 6, **dadurch gekennzeichnet, dass** das Strömungs-Leitelement (51) mehrere im Bereich der Abgas-Eintrittsmündung (45) des Mischrohrelements (40) angeordnete Abgas-Leitschaufeln (53) aufweist, die umfangsseitig verteilt und/oder beabstandet an einer Rohrwand (59) des Mischrohrelements festgelegt sind, insbesondere mit ihren freien Endbereichen (57), in Radialrichtung gesehen, nach innen gekrümmt sind und/oder in definierter Weise von der Rohrwand (59) des Mischrohrelements (40) abragen.

8. Abgasreinigungsvorrichtung nach einem der vorhergehenden Ansprüche, **dadurch gekennzeichnet, dass** eine Injektionseinrichtung (39) vorgesehen ist, mittels der das Additiv in das Innere des Mischrohrelements (40) injizierbar und/oder einleitbar ist, insbesondere dergestalt, dass die Einleitung des Additivs in Abgas-Strömungsrichtung und/oder, in Rohrelement-Radialrichtung gesehen, zentral und/oder stromab des wenigstens einen Strömungs-Leitelements (51) erfolgt.

9. Abgasreinigungsvorrichtung nach Anspruch 8, **dadurch gekennzeichnet, dass** die Injektionseinrichtung (39) an einer den U-Schenkeln (29, 31) abgewandten Außenwand (37) der U-Basis (33) des Rohrbogenelements (40) gehaltert ist.

10. Abgasreinigungsvorrichtung nach Anspruch 8 oder 9, **dadurch gekennzeichnet, dass** die Injektionseinrichtung (39) derart ausgebildet und/oder angeordnet ist, dass eine Düse (41) der Injektionseinrichtung (39) in einen Abgas-Eintrittsbereich (43) des Mischrohrelements (40) einragt.

11. Abgasreinigungsvorrichtung nach einem der vorhergehenden Ansprüche, **dadurch gekennzeichnet, dass** das Homogenisier-Element (61) derart an der Rohrwand des Rohrbogenelements (27) festgelegt ist, dass mittels diesem der Strömungsquerschnitt gegenüber einem stromauf und/oder stromab an das Homogenisier-Element (61) angrenzenden Strömungsbereich reduziert ist.

12. Abgasreinigungsvorrichtung nach einem der vorhergehenden Ansprüche, **dadurch gekennzeichnet, dass** der stromauf angeordnete Abgasstrangteil (23) wenigstens einen Partikelfilter (11) und/oder wenigstens einen Oxidationskatalysator (9) und/oder wenigstens ein Mischelement (5), insbesondere einen statischen Mischer und/oder ein Lochblech (7), aufweist, wobei bevorzugt vorgesehen ist, dass der Partikelfilter (11) an einen U-Schenkel (29) des Rohrbogenelements (27) angeschlossen ist.

13. Abgasreinigungsvorrichtung nach einem der vorhergehenden Ansprüche, **dadurch gekennzeichnet, dass** der stromab angeordnete Abgasstrangteil (25) wenigstens einen SCR-Katalysator (15, 17) und/oder wenigstens einen Ammoniak-Sperrkatalysator (19) aufweist, wobei bevorzugt vorgesehen ist, dass der SCR-Katalysator (15, 17) an einen U-Schenkel (31) des Rohrbogenelements (27) angeschlossen ist.

14. Fahrzeug, insbesondere Nutzfahrzeug, mit einer Abgasreinigungsvorrichtung nach einem der vorhergehenden Ansprüche.

## Claims

1. An exhaust gas purification device for a vehicle, in particular for a commercial vehicle, having a least one SCR catalyst (15, 17) arranged in an exhaust line of the exhaust gas purification device (1), and having a mixing and deflecting device (13), which is arranged upstream of the at least one SCR catalyst (15, 17) as seen in the direction of exhaust gas flow and by means of which an additive, in particular an aqueous urea solution, that can be introduced into an exhaust gas flow can be mixed with the exhaust gas flow and by means of which the exhaust gas flow can be deflected, in particular can be deflected through approximately 180°, wherein the mixing and deflecting device (13) has a substantially U-shaped bent tube element (27), by means of which an exhaust line part (23) arranged upstream of the mixing and deflecting device (13) and an exhaust line part (25) arranged downstream of the mixing and deflecting device (13) can be fluidically connected, wherein the mixing and deflecting device (13) has a mixing tube element (40), which is arranged within the bent tube element (27), wherein an exhaust gas inlet opening (45) of the mixing tube element (40) is assigned to a first of the U legs (29) of the bent tube element (27), and wherein an exhaust gas outlet opening (47) of the mixing tube element is assigned to a second of the U legs (31) of the bent tube element (27), **characterized in that** the mixing and deflecting device (13) has at least one homogenization element (61) designed as an annular orifice plate, which is arranged downstream of the mixing tube element (13), in the region of the exhaust gas outlet opening (47) of the mixing tube element (40).

2. The exhaust gas purification device according to Claim 1, **characterized in that** at least one U leg (29, 31) of the bent tube element (27) is designed as a straight and/or cylindrical tube section, and/or **in that**, at least in some region or regions, the cross section of at least one U leg (29, 31) extends as far as an outer wall (37), remote from the U legs (29, 31), of the U base (33).

3. The exhaust gas purification device according to Claim 1 or 2, **characterized in that**, at least in some region or regions, an outer wall (37), remote from the U legs (29, 31), of the U base (33) is designed as a flat surface, in particular is formed by a flat plate, wherein provision is preferably made for the two U legs (29, 31) to be aligned perpendicularly to said outer wall (37).

4. The exhaust gas purification device according to one of the preceding claims, **characterized in that** the U base (33) of the bent tube element (27) is designed as a block- and/or box-shaped, in particular cuboidal, connecting element, which forms a flow channel (35) fluidically connecting the two mutually spaced U legs (29, 31) of the bent tube element (27).

5. The exhaust gas purification device according to one of the preceding claims, **characterized in that** the mixing tube element is arranged within the U base (33) of the bent tube element (27), and/or **in that** the mixing tube element (40) is designed as a straight and/or cylindrical tube section.

6. The exhaust gas purification device according to Claim 5, **characterized in that** at least one flow-guiding element (51), in particular a swirl element, by means of which a defined flow motion, in particular a defined swirling motion, can be imparted to the exhaust gas entering the mixing tube element (40), is provided at least in the region of an exhaust gas inlet opening (45) of the mixing tube element (40), wherein provision is preferably made for the flow-guiding element (51) to be connected in a materially unitary way and/or integrally to the mixing tube element (40).

7. The exhaust gas purification device according to Claim 6, **characterized in that** the flow-guiding element (51) has a plurality of exhaust gas guide blades (53), which are arranged in the region of the exhaust gas inlet opening (45) of the mixing tube element (40) and which are fixed on a tube wall (59) of the mixing tube element in a manner distributed around the circumference and/or spaced apart, in particular with their free end regions (57) curved inwards, as seen in a radial direction, and/or projecting in a defined way from the tube wall (59) of the mixing tube element (40).

8. The exhaust gas purification device according to one of the preceding claims, **characterized in that** an injection device (39) is provided, by means of which the additive can be injected and/or introduced into the interior of the mixing tube element (40), in particular in such a way that the introduction of the additive takes place in the direction of flow of the exhaust gas and/or, as seen in the radial direction of the tube element, centrally and/or downstream of the at least one flow-guiding element (51).

9. The exhaust gas purification device according to Claim 8, **characterized in that** the injection device (39) is held on an outer wall (37), remote from the U legs (29, 31) of the U base (33) of the bent tube element (40).

10. The exhaust gas purification device according to Claim 8 or 9, **characterized in that** the injection device (39) is designed and/or arranged in such a way that a nozzle (41) of the injection device (39) projects into an exhaust gas inlet region (43) of the mixing tube element (40).

11. The exhaust gas purification device according to one of the preceding claims, **characterized in that** the homogenization element (61) designed as a baffle element and/or as an orifice plate is of annular design, at least in some region or regions, and/or **in that** the homogenization element (61) is fixed on the tube wall of the bent tube element (27) in such a way that, by means of said element, the flow cross section is reduced in relation to a flow region ad-joining the homogenization element (61) in an upstream and/or downstream direction.

12. The exhaust gas purification device according to one of the preceding claims, **characterized in that** the exhaust line part (23) arranged upstream has at least one particulate filter (11) and/or at least one oxidation catalyst (9) and/or at least one mixing element (5), in particular a static mixer and/or perforated plate (7), wherein provision is preferably made for the particulate filter (11) to be connected to one U leg (29) of the bent tube element (27).

13. The exhaust gas purification device according to one of the preceding claims, **characterized in that** the exhaust line part (25) arranged downstream has at least one SCR catalyst (15, 17) and/or at least one ammonia barrier catalyst (19), wherein provision is preferably made for the SCR catalyst (15, 17) to be connected to one U leg (31) of the bent tube element (27).

14. A vehicle, in particular a commercial vehicle, having an exhaust gas purification device according to one of the preceding claims.

## Revendications

1. Ensemble d'épuration des gaz d'échappement pour véhicule, en particulier pour véhicule utilitaire, présentant un ou plusieurs catalyseurs SCR (15, 17) disposé dans le parcours des gaz d'échappement de l'ensemble (1) d'épuration des gaz d'échappement et un dispositif de mélange et de déviation (13) disposé en amont du ou des catalyseurs SCR (15, 17) dans la direction d'écoulement des gaz d'échappement, au moyen duquel un additif, en particulier une solution aqueuse d'urée, apte à être introduit dans l'écoulement de gaz d'échappement peut être mélangé avec l'écoulement de gaz d'échappement et au moyen duquel l'écoulement de gaz d'échappement peut être dévié et en particulier dévié d'environ 180°,
le dispositif de mélange et de déviation (13) présentant un élément tubulaire (27) en arc essentiellement en forme de U au moyen duquel une partie (23) du parcours des gaz d'échappement disposée en amont du dispositif de mélange et de déviation (13) et une partie (25) du parcours des gaz d'échappement disposée en aval du dispositif de mélange et de déviation (13) peuvent être reliées à écoulement,
le dispositif de mélange et de déviation (13) présentant un élément (40) de tube de mélange disposé à l'intérieur de l'élément tubulaire (27) en arc, une embouchure (45) d'entrée des gaz d'échappement de l'élément (40) de tube de mélange étant associée à une première (29) des branches du U de l'élément tubulaire (27) en arc et une embouchure de sortie (47) des gaz d'échappement de l'élément tubulaire de mélange étant associée à une deuxième (31) des branches du U de l'élément tubulaire (27) en arc,
**caractérisé en ce que**
le dispositif de mélange et de déviation (13) présente au moins un élément homogénéiseur (61) configuré comme écran annulaire disposé en aval du dispositif de mélange et de déviation (13) au niveau de l'embouchure de sortie (47) des gaz d'échappement de l'élément (40) de tube de mélange.

2. Ensemble d'épuration des gaz d'échappement selon la revendication 1, **caractérisé en ce qu'**au moins l'une des branches (29, 31) du U de l'élément tubulaire (27) en arc est configurée comme section tubulaire rectiligne et/ou cylindrique et/ou **en ce que** la section transversale d'au moins une des branches (29, 31) du U s'étend au moins en partie jusqu'à une paroi extérieure (37), non tournée vers l'une des branches (29, 31) du U, de la base (33) du U.

3. Ensemble d'épuration des gaz d'échappement selon les revendications 1 ou 2, **caractérisé en ce qu'**une paroi extérieure (37), tournée vers l'une des branches (29, 31) du U, de la base (33) du U est configurée au moins en partie sous la forme d'une surface plane et en particulier est formée par une plaque plane, les deux branches (29, 31) du U étant orientées de préférence perpendiculairement à cette paroi extérieure (37).

4. Ensemble d'épuration des gaz d'échappement selon l'une des revendications précédentes, **caractérisé en ce que** la base (33) du U de l'élément tubulaire (27) en arc est configurée comme élément de liaison en forme de bloc et/ou de caisson et en particulier en forme de parallélépipède qui forme un canal d'écoulement (35) qui relie mutuellement à écoulement les deux branches (29, 31) du U de l'élément tubulaire (27) en arc disposés à distance mutuelle.

5. Ensemble d'épuration des gaz d'échappement selon l'une des revendications précédentes, **caractérisé en ce que** l'élément de tube de mélange est disposé à l'intérieur de la base (33) du U de l'élément tubulaire (27) en arc et/ou **en ce que** l'élément (40) de tube de mélange est configuré comme section de tube rectiligne et/ou cylindrique.

6. Ensemble d'épuration des gaz d'échappement selon la revendication 5, **caractérisé en ce qu'**au moins un élément (51) de guidage d'écoulement, en particulier un élément de tourbillonnage, est prévu au moins au niveau d'une embouchure (45) d'entrée des gaz d'échappement de l'élément (40) de tube de mélange, et permet d'amener les gaz d'échappement qui pénètrent dans l'élément (40) de tube de mélange dans un déplacement d'écoulement défini et en particulier dans un déplacement de tourbillon défini, l'élément (51) de guidage d'écoulement étant relié à l'élément (40) de tube de mélange de préférence en correspondance de matière et/ou d'un seul tenant.

7. Ensemble d'épuration des gaz d'échappement selon la revendication 6, **caractérisé en ce que** l'élément (51) de guidage d'écoulement présente plusieurs aubes (53) de guidage des gaz d'échappement disposées au niveau de l'embouchure (45) d'entrée des gaz d'échappement de l'élément (40) de tube de mélange et sont réparties et/ou disposées à distance sur la périphérie sur une paroi (59) du tube de l'élément à tube de mélange, en particulier sont courbées vers l'intérieur par leurs parties (57) d'extrémité libre dans la direction radiale et/ou débordent de manière définie de la paroi tubulaire (59) de l'élément (40) de tube de mélange.

8. Ensemble d'épuration des gaz d'échappement selon l'une des revendications précédentes, **caractérisé en ce qu'**il présente un dispositif d'injection (39) au moyen duquel l'additif peut être injecté et/ou introduit à l'intérieur de l'élément (40) de tube de mélange, en particulier de telle sorte que l'introduction de l'additif s'effectue dans la direction d'écoulement des gaz d'échappement, ou centralement dans la direction radiale de l'élément tubulaire et/ou en aval du ou des éléments (51) de guidage d'écoulement.

9. Ensemble d'épuration des gaz d'échappement selon la revendication 8, **caractérisé en ce que** le dispositif d'injection (39) est maintenu sur une paroi extérieure (37) de la base (33) du U de l'élément tubulaire (40) en arc non tournée vers les branches (29, 31) du U.

10. Ensemble d'épuration des gaz d'échappement selon les revendications 8 ou 9, **caractérisé en ce que** le dispositif d'injection (39) est configuré et/ou disposé de telle sorte qu'une tuyère (41) du dispositif d'injection (39) pénètre dans une partie (43) d'entrée des gaz d'échappement de l'élément (40) de tube de mélange.

11. Ensemble d'épuration des gaz d'échappement selon l'une des revendications précédentes, **caractérisé en ce que** l'élément homogénéiseur (61) est défini sur la paroi du tube de l'élément tubulaire (27) en arc de telle sorte que la section d'écoulement soit réduite par rapport à une partie d'écoulement adjacente en amont et/ou en aval à l'élément homogénéiseur (61).

12. Ensemble d'épuration des gaz d'échappement selon l'une des revendications précédentes, **caractérisé en ce que** la partie (23) du parcours des gaz d'échappement disposée en amont disposée en amont présente au moins un filtre (11) à particules et/ou au moins un catalyseur d'oxydation (9) et/ou au moins un élément de mélange (5), en particulier un mélangeur statique et/ou une tôle perforée (7), le filtre (11) à particules étant de préférence raccordé à une branche (29) du U de l'élément tubulaire (27) en arc.

13. Ensemble d'épuration des gaz d'échappement selon l'une des revendications précédentes, **caractérisé en ce que** la partie (25) du parcours des gaz d'échappement disposée en aval présente au moins un catalyseur SCR (15, 17) et/ou au moins un catalyseur de blocage (19) à l'ammoniac, le catalyseur SCR (15, 17) étant de préférence raccordé à une branche (31) du U de l'élément tubulaire (27) en arc.

14. Véhicule, en particulier véhicule utilitaire, présentant un ensemble d'épuration des gaz d'échappement selon l'une des revendications précédentes.
